(19) Europäisches Patentamt
European Patent Office
Office européen des brevets

(11) **EP 4 604 372 A1**

(12) **EUROPEAN PATENT APPLICATION**

(43) Date of publication:
**20.08.2025 Bulletin 2025/34**

(21) Application number: **24157654.5**

(22) Date of filing: **14.02.2024**

(51) International Patent Classification (IPC):
**H02M 1/00** (2006.01)   **H02M 5/22** (2006.01)
**H02M 5/297** (2006.01)   **H02M 7/48** (2007.01)

(52) Cooperative Patent Classification (CPC):
**H02M 7/4807; H02M 1/0058; H02M 5/225;
H02M 5/297; H02M 7/4815**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Infineon Technologies Austria AG
9500 Villach (AT)**

(72) Inventor: **LEONG, Kennith Kin
9500 Villach (AT)**

(74) Representative: **Westphal, Mussgnug  & Partner,
Patentanwälte mbB
Werinherstraße 79
81541 München (DE)**

(54) **POWER CONVERTER, CONTROL CIRCUIT AND POWER CONVERSION METHOD**

(57)    A power converter, a control circuit for controlling a power converter, and a method for operating a power converter are disclosed. The power converter includes an input stage (1) including an input (11, 12) configured to receive an input voltage (Vin), and an output (13, 14); at least one resonant converter stage (3a, 3b, 3c; 3d) including an input (Ina, Inb, Inc; Ind) and an output (Outa, Outb, Outc; Outd) configured to be coupled to a power grid; a transformer (2) coupled between the output (13, 14) of the input stage (1) and the input (Ina, Inb, Inc; Ind) of the at least one resonant converter stage (3a, 3b, 3c; 3d); and a control circuit (7) configured to control operation of the input stage (1) and the at least one resonant converter stage (3a, 3b, 3c; 3d). The input stage (1) includes a switching circuit (15) connected to the input (11, 12) of the input stage (1) and at least one capacitor (16) connected between the switching circuit (15) and the output (13, 14) of the input stage (1).

FIG 1

**Description**

This disclosure relates in general to a power converter and to a method and a control circuit for operating a power converter, in particular a DC-AC.

DC-AC converters, which may also be referred to as inverters, may be used in various kinds of applications. Examples include converting DC power stored in a battery into AC power to be fed into an AC power grid. Such converters are available as single-phase converters or as three-phase converters. A single-phase converter is configured to receive power from a single DC power source and feed power into a single phase of the power grid. A three-phase converter is configured to receive DC power from a single DC power source and feed power into three phases of a three-phase power grid at the same time.

Feeding power into the power grid includes driving a current "against" a voltage provided by the power grid into the power grid. In order to control a power factor, a DC-AC converter may be configured to control a waveform of the current such that, for example, the current has the same waveform as the voltage provided by the power grid.

One example relates to a power converter. The power converter includes an input stage including an input configured to receive an input voltage, and an output. The power converter further includes at least one resonant converter stage having an input and an output, wherein the output is configured to be coupled to a power grid, a transformer coupled between the output of the input stage and the input of the at least one resonant converter stage, and a control circuit. The control circuit is configured to control operation of the input stage and the at least one resonant converter stage. The input stage includes a switching circuit connected to the input of the input stage and at least one capacitor connected between the switching circuit and the output of the input stage.

Examples are explained below with reference to the drawings. The drawings serve to illustrate certain principles, so that only aspects necessary for understanding these principles are illustrated. The drawings are not to scale. In the drawings the same reference characters denote like features.

Figure 1 illustrates one example of a power converter that includes an input stage configured to receive an input voltage, three resonant converter stages each coupled to the input stage by a transformer arrangement and each configured to be coupled to a power grid, and a control circuit configured to control operation of the input stage and the resonant converter stages;

Figure 2 illustrates one example of a power source configured to provide the input voltage to the input stage;

Figures 3 and 4 illustrate different examples of a power grid;

Figure 5 illustrates signal waveforms of voltages provided by the power grid at outputs of the resonant converter stages, according to one example;

Figure 6 illustrates one example of a method for operating a power converter of the type illustrated in Figure 1;

Figure 7 shows signal waveforms that illustrate operating a power converter of the type illustrated in Figure 1 in accordance with the method according to Figure 6 at a first grid voltage state;

Figure 8 shows signal waveforms that illustrate operating a power converter of the type illustrated in Figure 1 in accordance with the method according to Figure 6 at a second grid voltage state;

Figures 9 and 10 shows signal diagrams of power grid voltages, output currents of the resonant converter stages and durations of transfer phases of the resonant converter stages at different powers transferred from the input of the input stage to the outputs of the resonant converter stages;

Figure 11 illustrates one example of a power converter of the type illustrated in Figure 1 in greater detail;

Figure 12 illustrates one example of a resonant circuit and a switching circuit of one resonant converter stage of the type illustrated in Figure 11;

Figures 13A-13D show circuit diagrams that illustrate different operating modes of a resonant converter stage of the type illustrated in Figure 12;

Figures 14 and 15 illustrate different examples of a bidirectionally blocking electronic switch that may be used in the switching circuit of a resonant converter stage;

Figure 16 illustrates one example of a control circuit that is configured to operate the power converter in accordance with the method illustrated in Figure 6;

Figure 17 illustrates one example of a current threshold controller that may be included in a power transfer controller in the control circuit according to Figure 16;

Figure 18 illustrates a modification of the power converter according to Figure 11 that includes only one resonant converter stage; and

Figure 19 shows signal diagrams that illustrate one example for operating the power converter according to Figure 18.

In the following detailed description, reference is made to the accompanying drawings. The drawings form a part of the description and for the purpose of illustration show examples of how the invention may be used and implemented. It is to be understood that the features of the various embodiments described herein may be combined with each other, unless specifically noted otherwise.

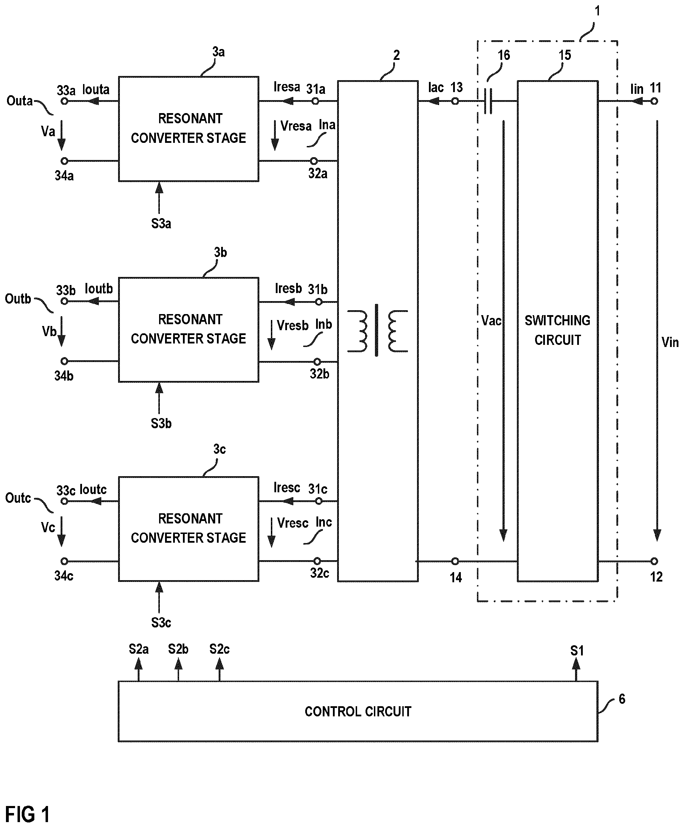

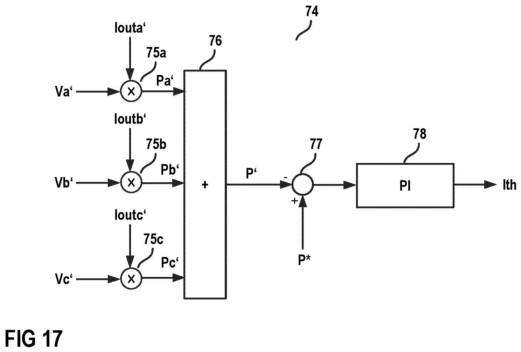

Figure 1 illustrates one example of a power converter. The power converter includes an input stage 1 and at least one resonant converter stage 3a, 3b, 3c, and a control circuit 6 that is configured to control operation of the input stage 1 and the at least one resonant converter stage 3b, 3b, 3c. In the example illustrated in Figure 1, the power converter includes 3 resonant converter stages 3a, 3b, 3c. Implementing the power converter with three converter stages, however, is only an example. According to another example illustrated in Figure 17 and explained herein further below, the power converter includes only one resonant converter stage.

The input stage 1 includes an input 11, 12 and an output 13, 14. The input 11, 12 is configured to receive an input voltage Vin and an input current Iin from a power source (not illustrated in Figure 1). Furthermore, the input stage 1 includes a switching circuit 15 that is coupled to the input 11, 12, and at least one capacitor 16. The at least one capacitor 16 is coupled between the switching circuit 15 and the output 13, 14 of the input stage 1. Just for the purpose of illustration, in the example illustrated in Figure 1, the capacitor 16 is connected between the switching circuit 15 and a first output node 13 of the output 13, 14. According to another example (not illustrated) the capacitor is connected between the switching circuit 15 and a second output node 14 of the output 13, 14. According to yet another example (not illustrated) the input stage 1 includes two capacitors, a first capacitor connected between the switching circuit 15 and the first output node 13 and a second capacitor connected between the switching circuit 15 and the second output node 14.

Each of the resonant converter stages 3a, 3b, 3c includes an input Ina, Inb, Inc and an output Outa, Outb, Outc. The input Ina, Inb, Inc of each of the resonant converter stages 3a, 3b, 3c is inductively coupled to the output 13, 14 of the input stage 1 by a transformer arrangement 2. The output Outa, Outb, Outc of each of the resonant converter stages 3a, 3b, 3c is configured to be connected to a power grid. The power converter with the three resonant converter stages 3a, 3b, 3c according to Figure 1 is configured to be connected to a three-phase power grid in such a way that each of the resonant converter stages 3b, 3b, 3c is configured to be connected to a respective one of three phases of the three-phase power grid.

At its output Outa, Outb, Outc, each of the resonant converter stages 3a, 3b, 3c is configured to provide a respective output current Iouta, Ioutb, Ioutc to the power grid. Voltages Va, Vb, Vc between first output nodes 33a, 33b, 33c and second output nodes 34a, 34b, 34c of the outputs Outa, Outb, Outc are defined by the power grid.

The control circuit 7 is configured to control operation of the switching circuit 15 by providing a control signal S1 that is received by the input stage 1 and that is configured to control operation of the input stage 1. Furthermore, the control circuit is configured to control operation of the resonant converter stages 3a, 3b, 3c by providing control signals S3a, S3b, S3c. Each of these control signals S3a, S3b, S3c is received by a respective resonant converter stage 3a, 3b, 3c and is configured to control operation of the respective resonant converter stage 3a, 3b, 3c.

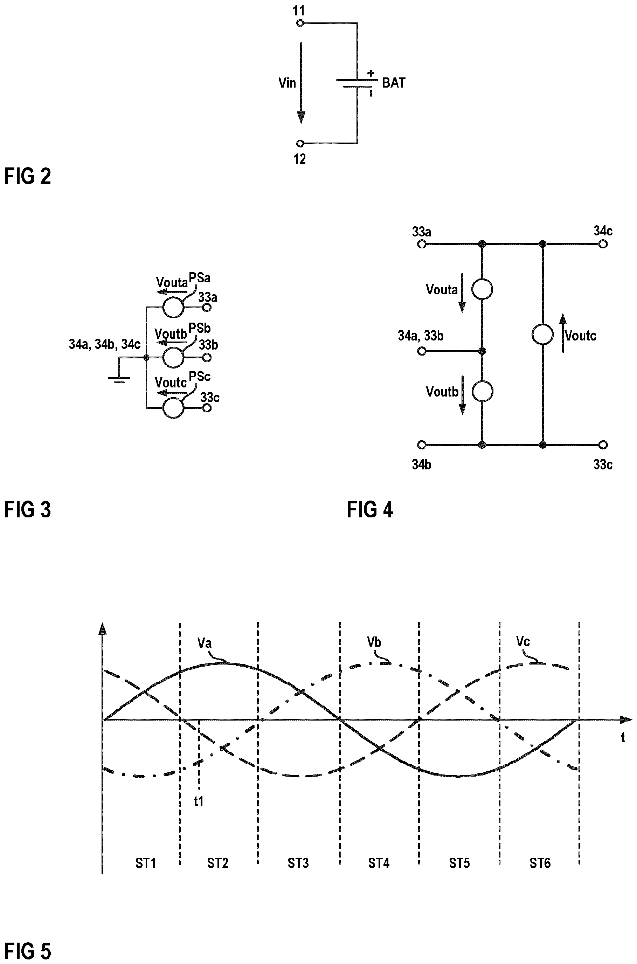

According to one example, the input voltage Vin is a direct voltage (DC voltage). Referring to Figure 2, the direct input voltage Vin may be provided by a battery BAT. According to one example, the power converter is configured to receive an input voltage Vin that may vary within a certain range. According to one example, the input voltage Vin may vary in a range of between 350 volts (V) and 900 V. A variation of the input voltage Vin may result from a variation of a charging state of a battery, for example.

According to one example, the power grid is an AC (alternating current) power grid, so that the power grid voltages Va, Vb, Vc available at the outputs Outa, Outb, Outc of the resonant converter stages 3b, 3b, 3c are alternating voltages.

The power grid may be implemented with a star configuration or with a delta configuration. Figure 3 schematically illustrates one example of a power grid having a star configuration, wherein PSa, PSb, PSc denote the three different phases of the power grid. In this example, each of the power grid voltages Va, Vb, Vc is provided such that the power grid voltages Va, Vb, Vc are referenced to the same reference node.

Figure 4 schematically illustrates one example of a power grid having a delta configuration. In this example, the power grid voltages Va, Vb, Vc are referenced to different nodes, in particular, each of the grid voltages Va, Vb, Vc is referenced to a respective output node of one of the resonant converter stages 3b, 3b, 3c. In each of the configurations illustrated in Figures 3 and 4, one power grid voltage Va, Vb, Vc is available at the output Outa, Outb, Outc of a respective resonant converter stage.

According to one example illustrated in Figure 5, the power grid voltages Va, Vb, Vc are sinusoidal voltages that have the same frequency and RMS (root mean square) value. The frequency is 50 Hz or 60 Hz, for example. The RMS value is selected from between 100 $V_{RMS}$ and 300 $V_{RMS}$. According to one example, the RMS value is 110 $V_{RMS}$ or 230 $V_{RMS}$. Figure 5 illustrates one period of each of the power grid voltages Va, Vb, Vc. In this example, a phase shift between each pair of the power grid voltages Va, Vb, Vc is 120° ($2\pi/3$).

In a voltage system including three sinusoidal grid voltages Va, Vb, Vc of the type illustrated in Figure 5, the voltage system includes six different states ST1-ST6 in each period of the grid voltages Va, Vb, Vc. Each of these states is defined by the polarities of the grid voltages Va, Vb, Vc. In each state, each of the grid voltages Va, Vb, Vc has a certain polarity that does not change. In a first state ST1, for example, the first and third grid voltages Va, Vc are positive and the second input voltage Vb is negative; in a second state ST2, for example, the first grid voltage Va is positive and the second and third grid voltages Vb, Vc are negative; etc.

The power converter operates as a DC-AC converter, which may also be referred to as inverter, when the input voltage Vin is a DC voltage and when the power converter provides output currents Iouta, Ioutb, Ioutc to a power grid providing AC grid voltages Va, Vb, Vc.

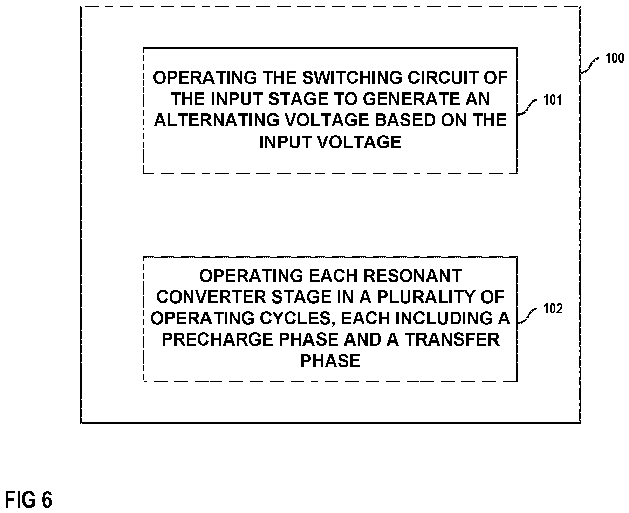

Figure 6 illustrates one example of a method for operating a power converter of the type illustrated in Figure 1. Referring to Figure 6, the method (100) of operating the power converter includes: (101) operating the switching circuit 15 of the input stage 1 such that it generates an alternating voltage Vac based on the input voltage Vin; and (102) operating each resonant converter stage 3a, 3b, 3c in a plurality of operating cycles, wherein each operating cycle includes a precharge phase and a transfer phase.

According to one example, the alternating voltage Vac generated by the switching circuit 15 is an alternating voltage with a rectangular signal waveform, so that a voltage level of the alternating voltage Vac alternates between the voltage level of the input voltage Vin and the negated voltage level (-Vin) of the input voltage Vin. A frequency of the alternating voltage Vac is variable and dependent on various parameters. This is explained in detail herein further below.

Referring to Figure 1, the alternating voltage Vac provided by the switching circuit 15 is received by a series circuit including the at least one capacitor 16 and the transformer arrangement 2. Based on the alternating voltage Vac generated by the switching circuit 15, the circuit arrangement including the at least one capacitor 16 and the transformer arrangement 2 generates input voltages Vresa, Vresb, Vresc between first input nodes 31a, 31b, 31c and second input nodes 32a, 32b, 32c of the inputs Ina, Inb, Inc of the resonant converter stages 3a, 3b, 3c. According to one example, the transformer arrangement 2 is implemented in such a way that the input voltages Vresa, Vresb, Vresc are essentially the same, Vresa=Vresb=Vresc. One example of a transformer arrangement of this type is explained herein further below.

The input voltages Vresa, Vresb, Vresc provided to the inputs Ina, Inb, Inc of the resonant converter stages 3a, 3b, 3c cause input currents Iresa, Iresb, Iresc at the inputs Ina, Inb, Inc of the resonant converter stages 3a, 3b, 3c. These input currents Iresa, Iresb, Iresc are also referred to as resonant currents in the following.

In the following, for the purpose of explanation, resonant converter stage 3a is referred to as first resonant converter stage, the resonant current Iresa of the first resonant converter stage 3a is referred to as first resonant current, the output current Iouta of the first resonant converter stage 3a is referred to as first output current, and the grid voltage Va received by the first resonant converter stage 3a is referred to as first grid voltage; resonant converter stage 3b is referred to as second resonant converter stage, the resonant current Iresb of the second resonant converter stage 3b is referred to as second resonant current, the output current Ioutb of the second resonant converter stage 3b is referred to as second output current, and the grid voltage Vb received by the second resonant converter stage 3b is referred to as second grid voltage; and resonant converter stage 3c is referred to as third resonant converter stage, the resonant current Iresc of the third resonant converter stage 3c is referred to as third resonant current Iresc, the output current Ioutc of the third resonant converter stage 3c is referred to as third output current, and the grid voltage Vc received by the third resonant converter stage 3c is referred to as third grid voltage.

The precharge phase of the resonant converter stages 3a, 3b, 3c is an operating phase in which the resonant converter stages 3b, 3b, 3c are precharged. This includes transferring energy from the input 11, 12 of the input stage 1 via the input stage 1 and the transformer arrangement 2 to the resonant converter stages 3a, 3b, 3c and storing the energy in a respective resonant tank of each of the resonant converter stages 3a, 3b, 3c. During the precharge phase the output currents Iouta, Ioutb, Ioutc are zero, Iouta = Ioutb = Ioutc. Thus, in the precharge phase, each of the resonant currents Iresa, Iresb, Iresc only circulates in the respective resonant converter stage 3a, 3b, 3c.

The transfer phase of the resonant converter stages 3a, 3b, 3c is an operating phase in which power is transferred from the resonant converter stages 3b, 3b, 3c to the power grid. In this operating phase, the output currents Iouta, Ioutb, Ioutc are different from zero. A transfer duration, is a time duration in which a respective resonant converter stage 3a, 3b, 3c transfers power to the respective phase of the power grid. The transfer duration is also referred to as injection time in the following.

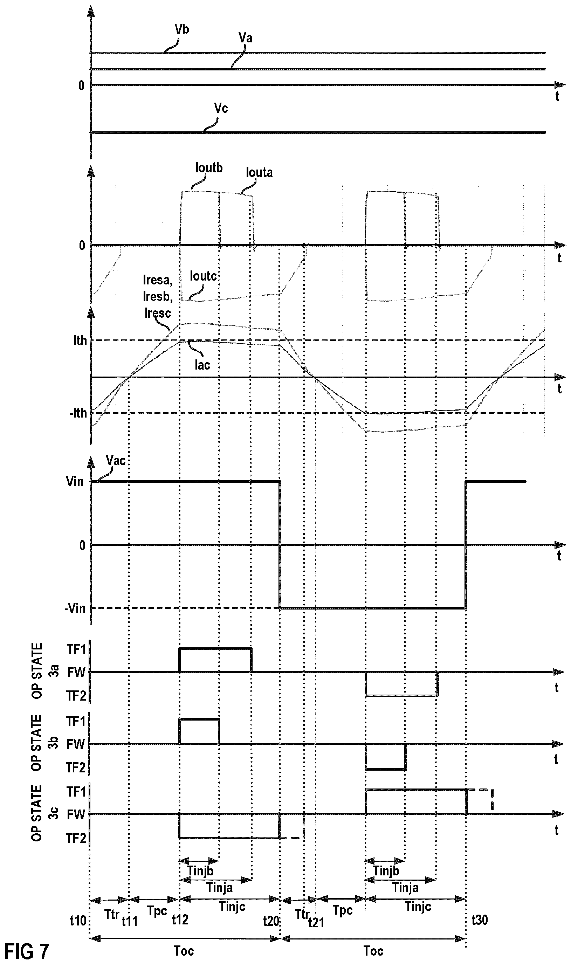

Figure 7 shows signal diagrams that illustrate operating the power converter in accordance with the method illustrated in Figure 6. More specifically, Figure 7 shows signal diagrams of the grid voltages Va, Vb, Vc, the output currents Iouta, Ioutb, Ioutc and the resonant currents Iresa, Iresb, Iresc of the resonant converter stages 3a, 3b, 3c, and the alternating voltage Vac. Furthermore, Figure 7 illustrates operating states of the resonant converter stages 3a, 3b, 3c over the time.

Figure 7 shows the signal diagrams over a time duration that essentially equals one period of the alternating voltage Vac. One period of the alternating voltage Vac includes a positive half-period in which the alternating voltage is positive and essentially equals the input voltage, Vac=Vin; and a negative half period in which the alternating voltage is negative and essentially equals the negated (inverted) input voltage Vin, Vac=-Vin. It should be noted that the frequency of the alternating voltage Vac is much higher than the frequency of the grid voltages Va, Vb, Vc, so that the grid voltages Va, Vb, Vc are essentially constant over the duration of one period of the alternating voltage Vac. The frequency of the alternating voltage Vac is in a range of between 50 kHz and 3 megahertz (MHz), for example.

In the example illustrated in Figure 7, the first and second grid voltages Va, Vb are positive, and the third grid voltage Vc is negative. Thus, the signal waveforms according to Figure 7 illustrate operation of the power converter in an operating scenario in which the grid voltage system is in the third state ST3 (see, Figure 5).

Referring to the above, operating the power converter includes operating the resonant converter stages 3a, 3b, 3c in a plurality of successive operating cycles. The duration of each of these operating cycles essentially equals the duration of one half-period of the alternating voltage Vac. For the purpose of explanation it is assumed that start and end of the operating cycles correspond to start and end of the half period, so that a half-period and a corresponding operating cycle start at the same start time and end at the same end time.

According to one example, the precharge phase is an operating phase in which a magnitude of the resonant currents Iresa, Iresb, Iresc increase from zero to a predefined current threshold. According to one example, this includes that the resonant currents Iresa, Iresb, Iresc, during the precharge phase, increase from zero to a predefined positive current threshold Ith during the positive half-period of the alternating voltage Vac and decrease from zero to a predefined negative current threshold -Ith during the negative half-period of the alternating voltage Vac. The positive and negative current thresholds may have the same magnitude. According to one example (as illustrated in Figure 7), the resonant converter stages 3a, 3b, 3c are simultaneously precharged, so that the magnitudes of the resonant currents Iresa, Iresb, Iresc simultaneously increase during the precharge phase. In Figure 7, Tpc denotes the duration of one precharge phase. This duration is also referred to as precharge time Tpc in the following.

According to one example, the resonant currents Iresa, Iresb, Iresc are proportional to an alternating current Iac associated with the alternating voltage Vac, wherein the magnitude |Iac| of the alternating current Iac equals the input current Iin. Referring to Figure 7, the alternating current Iac increases after the beginning of a positive half period of the alternating voltage Vac and decreases after the beginning of a negative half-period of the alternating voltage.

According to one example, controlling the precharge time Tpc includes monitoring the alternating current Iac and ending the precharge time Tpc when the alternating current Iac has reached the predefined positive current threshold Ith in the positive half period of the alternating voltage Vac or has reached the predefined negative current threshold -Ith in the negative half-period of the alternating voltage Vac. According to another example, controlling the precharge time Tpc includes monitoring the input current Iin and ending the precharge phase whenever the input current Iin reaches the predefined positive current threshold Ith after the beginning of each half period of the alternating voltage Vac.

According to yet another example, controlling the duration of the precharge phase includes monitoring the resonant currents Iresa, Iresb, Iresc and ending the precharge phase when the resonant currents Iresa, Iresb, Iresc have reached a predefined positive current threshold in the positive half-period of the alternating voltage Vac or have reached a predefined negative current threshold -Ith in the negative half-period of the alternating voltage Vac.

Referring to Figure 7, the transfer phases of the resonant converter stages 3b, 3b, 3c start at the end of the precharge phase. During the transfer phase each resonant converter stage provides an output current Iouta, Ioutb, Ioutc different from zero to the power grid. That is, each of the resonant converter stages 3b, 3b, 3c injects a current into the power grid. In Figure 7, Tinja denotes the injection time of the first resonant converter stage 3a, Tinjb denotes the injection time of the second resonant converter stage 3b, and Tinjc denotes the injection time of the third resonant converter stage 3c.

During the transfer phase, the resonant currents Iresa, Iresb, Iresc continue to. During the transfer phase, in each resonant converter stage, 3a, 3b, 3c, the magnitude of the respective output current Iouta, Ioutb, Ioutc equals the magnitude of the respective resonant current Iresa, Iresb, Iresc. During the transfer phase power is still transferred from the input stage 1 to the resonant converter stages 3b, 3b, 3c via the transformer arrangement. Due to the transfer of power from the resonant converter stages 3, 3b, 3c to the power grid, magnitudes of the resonant currents Iresa, Iresb, Iresc do not further increase during the transfer phase, but may decrease.

The magnitude of the resonant currents Iresa, Iresb, Iresc and, therefore, the magnitude of the output currents Iouta, Ioutb, Ioutc at least at the beginning of the transfer phase is defined by the current threshold Ith that defines the end of the precharge phase and the start of the transfer phase. Thus, a power level of power transferred by the power converter from the input 11, 12 of the input stage 1 to the power grid can be adjusted by suitable adjusting the current threshold Ith. This is explained in detail herein further below.

According to one example, the power converter is operated as an inverter. In this example, the output currents Iouta, Ioutb, Ioutc are generated such that the average output currents <Iouta>, <Ioutb>, <Ioutc> have the same waveform as the grid voltages Va, Vb, Vc. Thus, when the grid voltages Va, Vb, Vc are sinusoidal voltages, the average output currents <Iouta>, <Ioutb>, <Ioutc> are sinusoidal currents. "Average output current" as used herein is the average of a respective one of the output currents Iouta, Ioutb, Ioutc over the duration of at least one operating cycle of the respective resonant converter stage 3a, 3b, 3c.

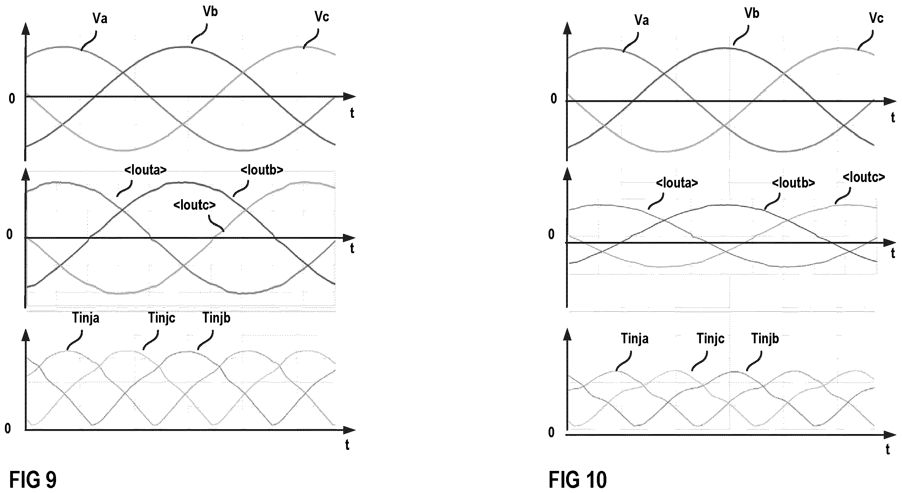

According to one example, the output currents Iouta, Ioutb, Ioutc are generated such that each average output current <Iouta>, <Ioutb>, <Ioutc> is proportional to the respective grid voltage Va, Vb, Vc. According to one example, to achieve a PFC functionality of the power converter, the injection times Tinja, Tinjb, Tinjc are dependent on magnitudes of the grid voltages Va, Vb, Vc in such a way that an injection time increases as the respective grid voltage Va, Vb, Vc increases and decreases as the respective grid voltage Va, Vb, Vc decreases. This is illustrated in Figures 9 and 10 that are explained herein further below.

Referring to the above, in each of the resonant converter stages 3a, 3b, 3c, the output current Iouta, Ioutb, Ioutc during the transfer phase has the same magnitude as the resonant current Iresa, Iresb, Iresc. The current direction (polarity) of the output current Iouta, Ioutb, Ioutc, however, is dependent on the polarity of the respective grid voltage Va, Vb, Vc and independent of the current direction of the resonant current Iresa, Iresb, Iresc. Each of the output currents Iouta, Ioutb, Ioutc may have a first current direction and a second current direction opposite the first current direction. For the purpose of explanation, the first current direction is the current direction indicated by the arrows in Figure 1. Furthermore, an output current having the first current direction is referred to as positive output current and an output current having the second current direction is referred to as negative output current in the following.

According to one example, each of the output currents Iouta, Ioutb, Ioutc is generated such that the output current Iouta, Ioutb, Ioutc is positive when the respective grid voltage Va, Vb, Vc is positive and such that the output current Iouta, Ioutb, Ioutc is negative when the respective grid voltage Va, Vb, Vc is negative.

Each of the resonant currents Iresa, Iresb, Iresc may have a first current direction and a second current direction opposite the first current direction. For the purpose of illustration, the first current direction is the current direction indicated by the arrows in Figure 1. Furthermore, a resonant current having the first current direction is referred to as positive resonant current and a resonant current having the second current direction is referred to as negative resonant current in the following.

The current directions of the resonant currents Iresa, Iresb, Iresc are dependent on the polarity of the alternating voltage Vac. In the example illustrated in Figure 7, the resonant currents Iresa, Iresb, Iresc are positive during the transfer phase in the positive half period of the alternating voltage Vac and negative during the transfer phase in the negative half period of the alternating voltage Vac. For adjusting the current direction of each output current Iouta, Ioutb, Ioutc dependent on the current direction of the respective resonant current Iresa, Iresb, Iresc each of the resonant converter stages 3b, 3b, 3c can be operated in two different transfers states as explained in the following.

In addition to the two different transfer states, each resonant converter stage 3a, 3b, 3c can be operated in a freewheeling state, so that each of the resonant converter stages 3a, 3b, 3c can be operated in at least three different operating states, a freewheeling state FW, a first transfer state TF1, and a second transfer state TF2.

(1) The freewheeling state FW is an operating state in which the resonant current Iresa, Iresb, Iresc circulates in the respective resonant converter stage 3a, 3b, 3c and in which the respective output current Iouta, Ioutb, Ioutc is zero.

(2) The first transfer state TF1 is an operating state in which the output current Iouta, Ioutb, Ioutc and the resonant current Iresa, Iresb, Iresc of the respective resonant converter stage 3a, 3b, 3c have the same current direction. In this operating state, the resonant current Iresa, Iresb, Iresc is directed directly to the respective output Outa, Outb, Outc as the output current Iouta, Ioutb, Ioutc.

(3) The second transfer state TF2 is an operating state in which the output current Iouta, Ioutb, Ioutc and the resonant current Iresa, Iresb, Iresc of the respective resonant converter stage 3a, 3b, 3c have opposite current directions. In this operating state, the resonant current Iresa, Iresb, Iresc is inverted and the inverted resonant current -Iresa, -Iresb, -Iresc directed to the respective output Outa, Outb, Outc as the output current Iouta, Ioutb, Ioutc.

Referring to Figure 7, each of the converter stages 3b, 3b, 3c is in the freewheeling state during the precharge phase. In the transfer phase, whether a resonant converter stage 3b, 3b, 3c is in the first transfer state TF1 or the second transfer state TF2 is dependent on the polarity of the respective grid voltage Va, Vb, Vc, which defines the desired direction of the respective output current Iouta, Ioutb, Ioutc, and the polarity of the alternating voltage Vac, which defines the direction of the resonant currents Iresa, Iresb, Iresc. In the example illustrated in Figure 7, a resonant converter stage 3a, 3b, 3c is operated in the first transfer state TF1 when the grid voltage Va, Vb, Vc received by the resonant converter stage 3a, 3b, 3c and the alternating voltage Vac have the same polarity. Thus, in the example illustrated in Figure 7, the first and second resonant converter stages 3a, 3b that receive positive grid voltages Va, Vb are operated in the first transfer state TF1 during the transfer phase in the positive half period of the alternating voltage Vac, and the third resonant converter stage 3c that receives a negative grid voltage Vc is operated in the first transfer state TF1 during the transfer phase in the negative half-period of the alternating voltage Vac. Furthermore, the third resonant converter stage 3c is operated in the second transfer state TF2 during the transfer phase in the positive half period of the alternating voltage Vac, and the first and second resonant converter stages 3a, 3b are operated in the second transfer state TF2 during the transfer phase in the negative half-period of the alternating voltage Va, Vc.

Referring to Figure 7, in addition to the precharge phase and the transfer phase each operating cycle of each resonant converter stage 3a, 3b, 3c may include a transient phase as a further operating phase. The transient phase is an operating phase between the start of a respective operating cycle and the start of the precharge phase. Thus, the transient phase is an operating phase between the start of a respective operating cycle and the time instance at which the alternating current Iac and the resonant current Iresa, Iresb, Iresc reaches zero. In the example illustrated in Figure 7, 110 denotes a time instance at which an operating cycle associated with the positive half-period of the alternating voltage Vac starts and t11 denotes a time instance at which the alternating current Iac reaches zero, so that the precharge phase starts. The transient phase is an operating phase between these time instances t10, t11. Another transient phase is between time instances t20 and t21, wherein t20 is the time instance at which an operating cycle associated with the negative half-period of the alternating voltage Vac starts and t21 is the time instance at which the alternating current Iac reaches zero, so that the precharge phase starts. Ttr denotes the durations of the transient phases in Figure 7.

In Figure 7, Toc denotes the duration of one operating cycle of the resonant converter stages 3a, 3b, 3c, which equals the duration of one half period of the alternating voltage Vac. The duration Toc of one operating cycle is given the duration Ttr of the transient phase plus the duration of the precharge time Tpc plus the longest of the injection times (Tinjc in Figure 7).

Referring to the above, the resonant converter stages 3a, 3b, 3c may have different injection times Tinja, Tinjb, Tinjc. In the example illustrated in Figure 7, in which the third grid voltage Vc has a magnitude that is higher than the magnitude of each of the first and second grid voltages Va, Vb, the third resonant stage 3c has the longest injection time of the three resonant converter stages 3a, 3b, 3c. According to one example, an operating cycle of the resonant converter stages 3b, 3b, 3c and a corresponding half-period of the alternating voltage Vac ends at the end of the longest injection time. Thus, in the example illustrated in Figure 7, at the end of the injection time Tinjc of the third resonant converter stage 3c, one operating cycle of the resonant converter stages 3a, 3b, 3c ends and a new operating cycle starts.

According to one example, each of the three converter stages 3a, 3b, 3c is in the freewheeling state between two successive transfer phases. According to another example, (illustrated in Figure 7), the resonant converter stage having the longest injection time, which is the third resonant converter stage 3c in the example illustrated in Figure 7, may remain in the transfer state for a certain time period after the end of the transfer phase and after the beginning of a new operating cycle. In each case, however, the transfer state of the resonant converter stage having the longest injection time ends on or before the time instance at which the resonant current in the respective resonant converter stage reaches zero and the precharge phase starts. According to one example, the resonant converter stage having the longest injection time, which is the third resonant converter stage 3c in the example illustrated in Figure 7, remains in the respective transfer state for at least 50% of a time duration of the time period between the end of the transfer phase and the beginning of the precharge phase. In each case, the transfer phase ends when a new operating cycle starts and the alternating voltage Vac changes its polarity.

At the beginning of a new operating cycle, that is, when the alternating voltage Vac changes its polarity, the alternating current Iac associated with the alternating voltage Vac starts to change its current direction. This involves that the magnitude of the alternating current Iac and, consequently, the magnitudes of the resonant currents Iresa, Iresb, Iresc rapidly decrease. Maintaining the resonant converter stage that has the longest injection time in the transfer state after the beginning of a new operating cycle helps to speed up the transition of the resonant currents Iresa, Iresb, Iresc from one current direction to the opposite current direction.

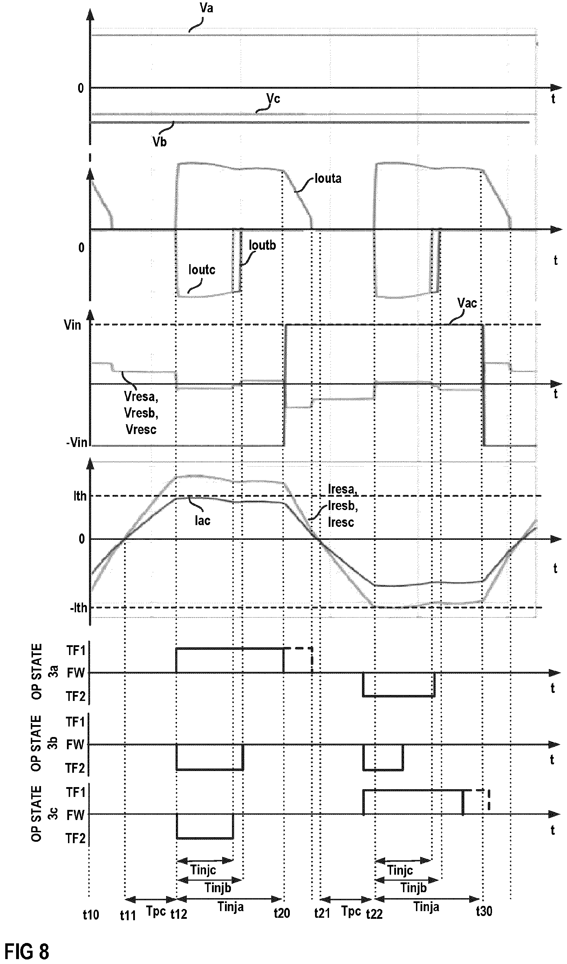

Figure 8 shows signal diagrams of the same signals illustrated in Figure 7, wherein the signal diagrams according to Figure 8 illustrate operation of the power converter at a different state of the input voltage system. In the example illustrated in Fig-ure 8, the first grid voltage Va is positive and has the highest magnitude of the three grid voltages Va, Vb, Vc, so that the first resonant converter stage 3a has the longest injection time. The second and third grid voltages Vb, Vc are negative. In addition to the signals explained with reference to Figure 7, Figure 8 also illustrates signal diagrams of the input voltages Vresa, Vresb, Vresc at the inputs Ina, Inb, Inc of the resonant converter stages 3a, 3b, 3c.

Referring to the above, the power converter may be operated as an inverter. In this example, the average output currents <Iouta>, <Ioutb>, <Ioutc> have the same waveform as the grid voltages Va, Vb, Vc. Signal waveforms of the grid voltages Va, Vb, Vc, of average output currents <Iouta>, <Ioutb>, <Ioutc>, and of injection times Tinja, Tinjb, Tinjc of a power converter operated in this way are illustrated in Figures 9 and 10. Figures 9 and 10 show the signal waveforms for two operating scenarios that are different with regard to the power level of power transferred from the input 11, 12 of the power converter to the power grid.

The overall power transferred by the power converter is essentially given by the sum of the output powers of the individual resonant converter stages 3a, 3b, 3c. The output power of each of the resonant converter stages 3a, 3b, 3c is given by the respective grid voltage Va, Vb, Vc multiplied with the respective output current Iouta, Ioutb, Ioutc. In the PFC mode, that is an operating mode in which the power converter operates as a PFC converter, the output powers of the individual resonant converter stages vary over each period of the grid voltages Va, Vb, Vc in accordance with the varying grid voltage Va, Vb, Vc and the varying output current Iouta, Ioutb, Ioutc. The overall power, however, is essentially constant and is given by $\frac{3}{2} \cdot \hat{V} \cdot \hat{I}out$, where $\hat{V}$ denotes the amplitude of the grid voltages Va, Vb, Vc, and $\hat{I}out$ denotes the amplitude of the output voltages Iouta, Ioutb, Ioutc.

The signal diagrams in Figure 9 illustrate an operating scenario in which the overall transferred power is higher than in an operating scenario illustrated by the signal diagrams according to Figure 10. Consequently, in the example illustrated in Figure 9, amplitudes of the average output currents <Iouta>, <Ioutb>, <Ioutc> are higher than the amplitudes of the average output currents <Iouta>, <Ioutb>, <Ioutc> in the example illustrated in Figure 10. Furthermore, in the scenario illustrated in Figure 9 the longest injection times are longer than the longest injection times in the scenario illustrated in Figure 10.

As can be seen from Figures 9 and 10, there may be very short time periods in which two resonant converter stages have the longest injection time period. This may occur, in particular, when the input voltage system changes from one state to another state. Referring to the above, the resonant converter stage having the longest injection time may remain in the transfer state for a certain time period after the end of the transfer phase. When two resonant converter stages have the same longest injection time one of the two resonant converter stages or both of the two resonant converter stages may remain in the transfer state after the end of the transfer phase for a certain time period.

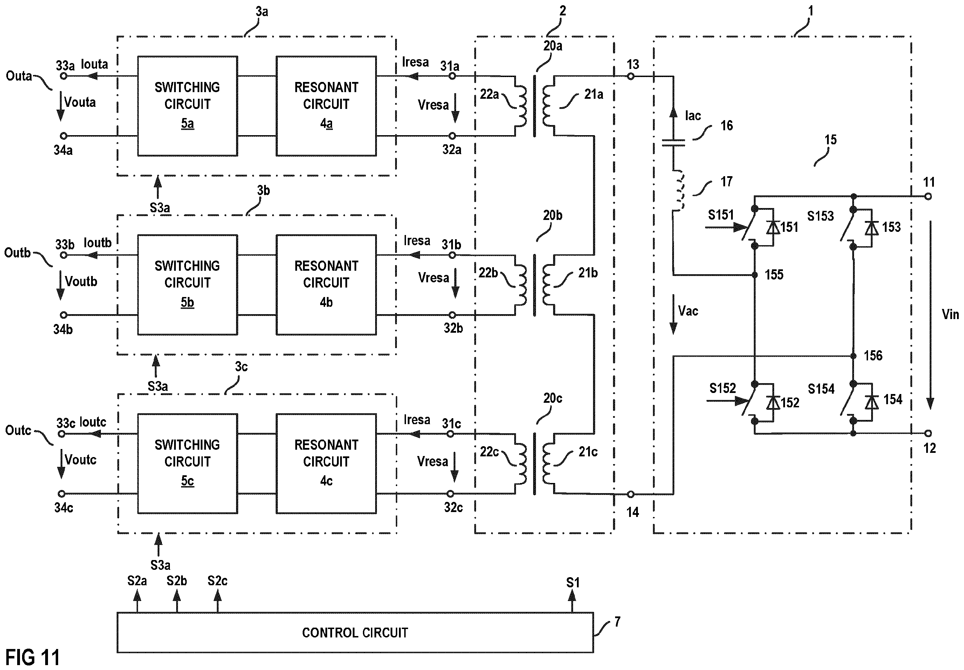

Figure 11 illustrates one example of the power converter according to Fig-ure 11 in greater detail. More specifically, Figure 11 illustrates more detailed examples of the switching circuit 15 of the input stage 1, the transformer arrangement 2, and the resonant converter stages 3a, 3b, 3c.

Referring to Figure 11, the switching circuit 15 may include two half-bridges, a first half-bridge with a first high-side switch 151 and a first low-side switch 152 connected in series between the first and second input nodes 11, 12, and a second half-bridge with a second high-side switch 153 and a second low-side switch 154 connected in series between the first and second input nodes 11, 12. The alternating voltage Vac is available between a first tap 155 of the first half-bridge and a second tap 156 of the second half-bridge. The first tap 155 is a circuit node at which the first high-side switch 151 and the first low-side switch 152 are connected, and the second tap 156 is a circuit node at which the second high-side switch 153 and the second low-side switch 154 are connected.

Each of the high-side and low-side switches of the first and second half-bridges is controlled by a respective control signal S151, S152, S153, S154. Each of these control signals S151-S154 is a sub-signal of the control signal S1 received from the control circuit 7 and illustrated in Figure 1. The control circuit 7 is configured to control the switching circuit 15 to generate the alternating voltage Vac by switching on or off the high-side and low-side switches 151-154 of the first and second half bridges. To generate the positive half-period of the alternating voltage Vac, the control circuit 7 operates the switching circuit 15 in a first state by switching on the first high-side switch 151 to connect the first tap 155 to the first input node 11, switching on the second low-side switch 154 to connect the second tap 156 to the second input node 12, and switching off the first low-side switch 152 and the second high-side switch 153. To generate the negative half period of the alternating voltage Vac, the control circuit 7 operates the switching circuit 15 in a second state by switching on the second high-side switch 153 to connect the second tap 156 to the first input node 11, switching on the first low-side switch 152 to connect the first tap 155 to the second input node 12, and switching off the first high-side switch 151 and the second low-side switch 154.

Each of the high-side and low-side switches 151-154 may be implemented as a unidirectionally blocking switching device. For this, each of the high-side and low-side switches 151-154 may include a switching element and a rectifier element connected in parallel with the switching element. A MOSFET, for example, is a unidirectionally blocking switching device. According to one example, the high-side and low-side switches are therefore implemented as MOSFETs. This, however, is only an example. Any other type of unidirectional blocking switching device may be used as well.

Referring to Figure 11, in addition to the at least one capacitor 16 coupling the switching circuit 15 with the transformer arrangement 2, the input stage 1 may optionally include an inductor 17 connected in series with the at least one capacitor 16. The inductor 17 may help to avoid high inrush currents.

Referring to Figure 11, the transformer arrangement 2 may include three transformers 20a, 20b, 20c that each include a first winding 21a, 21b, 21c and a second winding 22a, 22b, 22c. In each of the transformers 20a, 20b, 20c the first winding 21a, 21b, 21c is inductively coupled with the respective second winding 22a, 22b, 22c. The first windings 21a, 21b, 21c are connected in series, and a series connection including the first windings 22a, 21b, 21c is connected between the output nodes 13, 14 of the input stage 1. In this way, the alternating current Iac associated with the alternating voltage Vac and provided by the input stage 1 flows through each of the first windings 21a, 21b, 21c. Each of the second windings 22a, 22b, 22c is connected between the input nodes 31a, 32a, 31b, 32b, 31c, 32c of a respective one of the resonant converter stages 3a, 3b, 3c.

According to one example, the transformers 20a, 20b, 20c have the same winding ratio R, so that a proportionality factor between the alternating current Iac flowing through the first winding 21a, 21b, 21c and each of the resonant currents Iresa, Iresb, Iresc flowing through the respective second winding 22a, 22b, 22c is the same. Accordingly, the resonant currents are essentially the same. The winding ratio R is the ratio between the number of turns N21 of the first windings 21a, 21b, 21c and the number of turns N22 of the second windings 22a, 22b, 22c. The resonant currents Iresa, Iresb, Iresc are proportional to the alternating current with the proportionality factor being given by the winding ratio R, so that each of the resonant currents Iresa, Iresb, Iresc is about R times the alternating current Iac. Furthermore, the input voltages Vresa, Vresb, Vresc are proportional to the voltage across the respective first winding 21a, 21b, 21c with the proportionality factor being given by the reciprocal of the winding ratio, so that each of the input voltages Vresa, Vresb, Vresc is about 1/R times the voltage across the respective first winding 21a, 21b, 21c. The voltages across the first windings 21a, 21b, 21c are essentially the same. An overall voltage across the series circuit including the first winding 21a, 21b, 21c is given by the alternating voltage Vac minus a voltage drop across the capacitor 16 and the optional inductor 17.

According to one example, the winding ratio R is selected from between 1:1 and 3:1. The signal diagrams illustrated in Figures 7 and 8 illustrate operating scenarios in which the winding ratio is 1.5, so that each of the resonant currents Iresa, Iresb, Iresc is about 1.5 times the alternating current Iac.

Referring to Figure 11, each of the resonant converter stages 3a, 3b, 3c includes a resonant circuit 4a, 4b, 4c connected to the input Ina, Inb, Inc and a switching circuit 5a, 5b, 5c connected between the resonant circuit 4a, 4b, 4c and the output Outa, Outb, Outc. The resonant circuit 4a, 4b, 4c includes the resonant tank explained before that stores energy in the precharge phase. The switching circuit 5a, 5b, 5c defines the operating state of the resonant converter stage 3a, 3b, 3c. That is, the switching circuit 5a, 5b, 5c is configured to operate the resonant converter stage 3a, 3b, 3c in the freewheeling state or one of the two transfer states explained before.

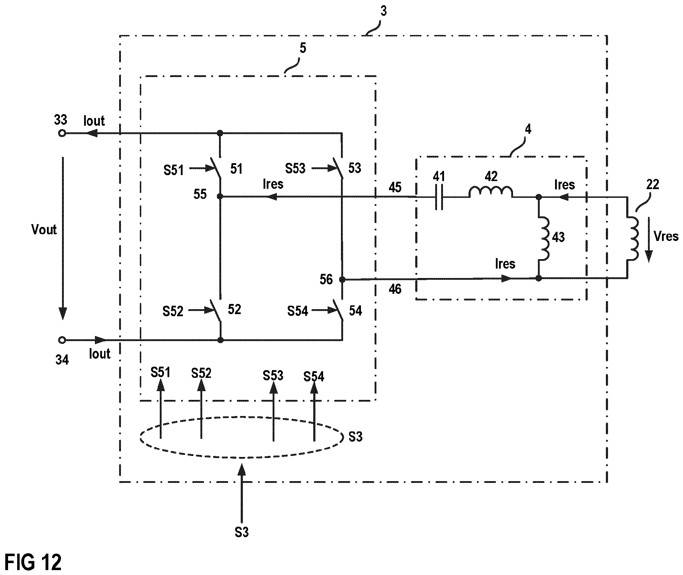

Figure 12 illustrates one example of the resonant circuit and the switching circuit of one resonant converter stage in greater detail. The resonant converter stage 3 illustrated in Figure 12 represents an arbitrary one of the resonant converter stages 3a, 3b, 3c illustrated in Figure 11, reference number 4 denotes the resonant circuit of the resonant converter stage 3, and reference number 5 denotes the switching circuit of the resonant converter stage 3. Furthermore, reference number 22 denotes the second transformer winding connected to the resonant circuit 4, Ires denotes the resonant current flowing in the resonant circuit 4, reference numbers 33, 34 denote the output nodes of the resonant converter stage 3, V denotes the grid voltage received at the output nodes 33, 34, and S3 denotes the control signal received by the resonant converter stage 3 from the control circuit 7 (not illustrated in Figure 12).

In the example illustrated in Figure 12, the resonant circuit 4 is an LLC circuit. The LLC circuit includes a series circuit with a capacitor 41 and a first inductor 42 that is connected in series with the second winding 22 providing the input voltage Vres. Furthermore, the LLC circuit includes a second inductor 43. According to one example, the second inductor 43 is a discrete device connected in parallel with the second transformer winding 22. According to another example, the second inductor 42 is the magnetizing inductance of the transformer. In this case, the second inductor 43 is formed by the transformer and, therefore, is an integral part of the transformer. The series circuit including the capacitor 41, the first inductor 42, and the transformer winding 22 is connected between a first output node 45 and a second output node 46 of the resonant circuit 4.

Referring to Figure 12, the switching circuit 5 includes two half-bridges, a first half-bridge with a first switch 51 and a second switch 52 connected in series between the output nodes 33, 34, and a second half-bridge with a third switch 53 and a fourth switch 54 connected in series between the first and second output nodes 33, 34. The first half-bridge includes a first tap 55, which is a circuit node at which the first and second switches 51, 52 are connected, and the second half-bridge includes a second tap 56, which is a circuit node at which the third and fourth switch is 53, 54 are connected. The first tap 55 is connected to the first output node 45 of the resonant circuit 4, and the second tap 56 is connected to the second output node 46 of the resonant circuit 4.

Each of the switches 51-54 is controlled by a respective control signal S51-S54 received from the control circuit 7 (not illustrated in Figure 12). According to one example, each of these control signals S51-S54 is a sub-signal of the control signal S3 illustrated in Figure 1. Each of the control signals S51-S54 is configured to switch on or off the respective switch 51-54.

Referring to the above, the operating state of each of the resonant converter stages 3a, 3b, 3c is defined by the respective switching circuit 5a, 5b, 5c. For this, each of the switching circuits 5a, 5b, 5c can be operated in at least three different operating states, (1) an operating state that causes the respective resonant converter stage 3a, 3b, 3c to operate in the freewheeling state FW; (2) an operating state that causes the respective resonant converter stage 3a, 3b, 3c to operate in the first transfer state; and (3) an operating state that causes the respective resonant converter stage 3a, 3b, 3c to operate in the second transfer state. The same nomenclature is used in the following for the operating states of the resonant converter stages 3a, 3b, 3c and the switching circuits 5a, 5b, 5c. That is, a freewheeling state of the switching circuit 5a, 5b, 5c is an operating state of the switching circuit 5a, 5b, 5c that operates the resonant converter stage 3a, 3b, 3c in the freewheeling state, a first transfer state of the switching circuit 5a, 5b, 5c is an operating state that operates the resonant converter stage 3a, 3b, 3c in the first transfer state, and a second transfer state of the switching circuit 5a, 5b, 5c is an operating state that operates the resonant converter stage 3a, 3b, 3c in the second transfer state.

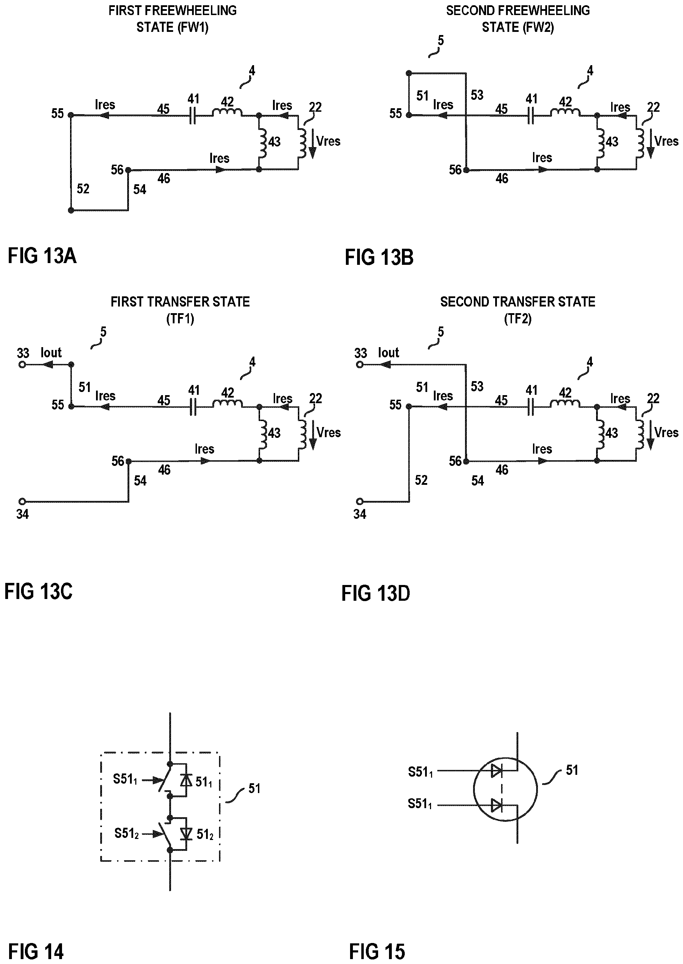

The different operating states of a switching circuit 5 of the type illustrated in Figure 12 is explained with reference to Figures 13A-13D, wherein each of Figures 13A-13D illustrates the switching circuit 5 in a different operating state. In Figures 13A-13D the switches 51-54 are not explicitly illustrated. Instead, only the switching state of the switches is illustrated. A switch that is in an on-state (switched on) is represented by a an electrically conducting connection. A switch that is in an off-state (switched off) is represented by an interrupted connection.

A switching circuit 5 of the type illustrated in Figure 12 can be operated in two different freewheeling states. In each of these freewheeling states, the switching circuit 5 connects the output nodes 45, 46 of the resonant circuit 4, so that the resonant current Ires circulates in the resonant circuit 4 and the output current Iout is zero. In a first freewheeling state FW1 illustrated in Figure 13A, the second and fourth switches 52, 54 are switched on and the first and third switches 51, 53 are switched off. In a second freewheeling state FW2 illustrated in Figure 13B, the first and third switches 51, 53 are switched on and the second and fourth switches 52, 54 are switched off.

In the first transfer state TF1 illustrated in Figure 13C, the first and fourth switches 51, 54 are switched on and the second and third switches 52, 53 are switched off. In this way, the first switch 51 connects the first output node 45 of the resonant circuit 4 to the first output node 33 of the resonant converter stage 3 and the fourth switch 54 connects the second output node 46 of the resonant circuit 4 to the second output node 35 of the resonant converter stage 3, so that the output current Iout and the resonant current Ires have the same current direction. That is, the output current Iout equals the resonant current Ires.

In the second transfer state TF2 illustrated in Figure 13D, the second and third switches 52, 53 are switched on and the first and fourth switches 51, 54 are switched off. In this way, the second switch 52 connects the first output node 45 of the resonant circuit 4 to the second output node 34 of the resonant converter stage 3 and the third switch 53 connects the second output node 46 of the resonant circuit 4 to the first output node 33 of the resonant converter stage 3, so that the output current Iout and the resonant current Ires have opposite current directions. That is, the output current Iout equals the inverted resonant current -Ires.

As can be seen from Figures 7 and 8, the resonant converter stages alternate between a freewheeling state and one of the second first and second transfer states TF1, TF2. Basically, the first and second freewheeling states FW1, FW2 are redundant, so that any of these freewheeling states can be used.

According to one example, the switches 51-54 of the switching circuit 5 are bidirectionally blocking electronic switches. A "bidirectionally blocking switch" is an electronic switch that, in an off-state, is configured to block independent of the polarity of a voltage applied across the switch. A bidirectionally blocking electronic switch may be implemented in various ways. Two different examples for implementing bidirectionally blocking switches are illustrated in Figures 13 and 14. Each of these figures illustrates one example for implementing the first switch 51 of the first half-bridge as a bidirectionally blocking switch. The remainder of the switches in the switching circuit 5 can be implemented in the same way.

In the example illustrated in Figure 13, the bidirectionally blocking switch 51 includes two unidirectionally blocking electronic switches $51_1$, $52_2$ connected in series. As explained above, a "unidirectionally blocking switch" is an electronic switch that, in the off-state, is blocking when the voltage applied across the switch has a first polarity and is conducting when the voltage applied across the switch has a second polarity opposite the first polarity.

Each of the unidirectionally blocking switches $51_1$, $51_2$ includes a switching element and a freewheeling element, such as a diode, connected in parallel with the switching element. The unidirectionally blocking switches are connected in series such that the freewheeling elements are connected in anti-series. Each of the unidirectionally blocking switches $51_1$, $51_2$ can be implemented as a MOSFET, for example. In a MOSFET, the integrated body diode forms the freewheeling element. Implementing each of the unidirectionally blocking switches as a MOSFETs, however, is only an example. It is also possible to implement these switches using any other kind of electronic switch and a freewheeling element, such as a diode, connected in parallel with the electronic switch.

In the example illustrated in Figure 14, the bidirectionally blocking switch is implemented as a bidirectionally blocking GaN switch, which is a monolithic implementation of a bidirectional switch.

Each of the bidirectionally blocking switches 51 illustrated in Figures 13 and 14 includes two control nodes, wherein each of these control nodes is configured to receive a respective control signal $S51_1$, $S51_2$ that controls operation of one of the unidirectionally blocking switches. The unidirectionally blocking switches can be switched on or off independently from each other, so that the bidirectionally blocking switch 51 can be operated in four different operating states, (i) a bidirectionally blocking state, which is an operating state in which both switches $51_1$, $51_2$ are switched off; (ii) a bidirectionally conducting state, which is an operating state in which both switches $51_1$, $51_2$ are switched on; (iii) a first unidirectionally conducting state, which is an operating state in which a first switch $51_1$ is switched on and a second switch $51_2$ is switched off, so that the electronic switch 51 is configured to conduct a current in a direction that is governed by the polarity of the freewheeling element of the second switch $51_2$; and (iv) a second unidirectionally conducting state, which is an operating state in which the first switch 51i is switched off and the second switch $51_2$ is switched on, so that the electronic switch 51 is configured to conduct a current in a direction that is governed by the polarity of the freewheeling element of the first switch $51_1$.

Operating a switching circuit 5 of the type illustrated in Figures 12 and 13A-13D with bidirectionally blocking switches may include operating the electronic switches 51-54 such that switching each switch 51-54 from the bidirectionally conducting state to the bidirectionally blocking state may include a transition phase in which the respective switch 51-54 operates in one of the first and second unidirectionally conducting states. Equivalently, switching each switch 51-54 from the bidirectionally blocking stage to the bidirectionally conducting state may include a transition phase in which the respective switch operates in one of the first and second unidirectionally conducting states. In this way, a hard commutation in the switching circuit 5 can be avoided and zero voltage switching (ZVS) can be achieved. Operating a switching circuit of the type illustrated in Figure 12 with two half-bridges and including bidirectionally blocking switches in such a way that hard commutation is avoided, is basically known, so that no further explanation is required in this regard.

The electronic switches 51-54 included in the switching circuit 5 may each include a parasitic capacitance (not illustrated in Figure 12), which is sometimes referred to as output capacitance. The output capacitance is charged when the respective electronic switch 51-54 switches from the on-state to the off-state. In order to reduce switching losses it is desirable to switch the electronic switches 51-54 from the off-state to the on-state under zero voltage switching (ZVS) conditions. This includes that each time a respective electronic switch 51-54 switches from the on-state to the off-state the parasitic capacitance has already been discharged. Discharging the parasitic capacitance requires a certain current to flow through the circuit path that includes the parasitic capacitance to be discharged. In the resonant converter stages 3a, 3b, 3c explained herein before the respective average output current <Iout>, <Ioutb>, <Ioutc> is adjusted by the duration the respective resonant current Iresa, Iresb, Iresc or the inverted resonant current resonant current -Iresa, -Iresb, -Iresc is injected into the power grid and not by the magnitude of the resonant current Iresa, Iresb, Iresc. Thus, even when the respective grid voltage Va, Vb, Vc is very low, or even zero, a current flows through the respective switching circuit 5a, 5b, 5c that is sufficiently high to provide for ZVS. In fact, as can be seen from Figure 7, the magnitude of the resonant current flowing during the transfer phase is independent of the grid voltages Va, Vb, Vc but is only defined by the power that is to be transmitted from the input 11, 12 of the input stage 1 to the power grid.

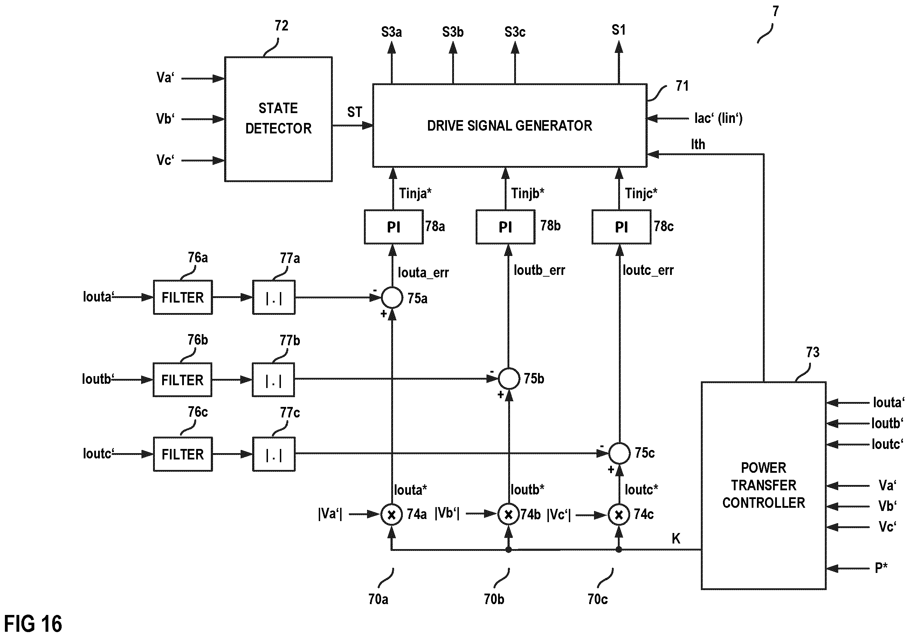

Figure 16 illustrates one example of the control circuit 7 that is configured to control operation of the input stage 1 and the resonant converter stages 3b, 3b, 3c by controlling operation of the switching circuit 15 in the input stage 1 and the switching circuits 5a, 5b, 5c in the resonant converter stages 3a, 3b, 3c. Referring to Figure 16, the control circuit 7 includes a drive signal generator 71 that is configured to generate the drive signals S3a, S3b, S3c received by the switching circuits 5a, 5b, 5c in the resonant converter stages 3a, 3b, 3c and the drive signal S1 received by the switching circuit 15 in the input stage 1. As explained above, each of the drive signals S1, S3a, S3b, S3c may include several sub-signals for controlling the electronic switches in the respective switching circuits 15, 5a, 5b, 5c.

The drive signal generator 71 receives desired injection times Tinja*, Tinjb*, Tinjc* for each of the resonant converter stages 3a, 3b, 3c. The desired injection times Tinja*, Tinjb*, Tinjc*, which may also be referred to as injection time references, represent the desired power transfer duration of the individual resonant converter stages 3a, 3b, 3c in each of the operating cycles. The desired injection time Tinja* represents the desired power transfer duration of the first resonant converter stage 3a, the desired injection time Tinjb* represents the desired power transfer duration of the second resonant converter stage 3b, and desired injection time Tinjc* represents the desired power transfer duration of the third resonant converter stage 3c. The drive signal generator 71 is configured, in each operating cycle, to operate each of the resonant converter stages 3a, 3b, 3c in one of the first and second transfers states TF1, TF2, TF3 for a time duration defined by the respective desired injection time Tinja*, Tinjb*, Tinjc*. Referring to the above, whether to operate a certain resonant converter stage 3a, 3b, 3c in the first transfer state or the second transfer state is dependent on the polarity of the grid voltage Va, Vb, Vc received by the respective resonant converter stage 3a, 3b, 3c and the polarity of the alternating voltage Vac. According to one example explained hereinabove, a resonant converter stage 3a, 3b, 3c is operated in the first transfer state TF1 when the grid voltage Va, Vb, Vc and the alternating voltage have the same polarity and in the second transfers state when the grid voltage Va, Vb, Vc and the alternating voltage Vac have opposite polarities.

According to one example, the drive signal generator 71 receives a state signal ST from a state detector 72. The state signal ST may represent any of the states ST1-ST6 of the great voltage system according to Figure 5, so that the state signal ST, at each time, includes an information on the polarities of the grid voltages Va, Vb, Vc. For detecting the polarities of the grid voltages Va, Vb, Vc the state detector 72 receives measured grid voltages Va', Vb', Vc'. Each of these measured grid voltages Va', Vb', Vc' is a measurement signal that represents a respective one of the grid voltages Va, Vb, Vc. The grid voltages can be measured using conventional voltage sensors.

As explained above, the drive signal generator 71 controls operation of the switching circuit 15 in the input stage 1 to generate the alternating voltage Vac. Thus, the information on the polarity of the alternating voltage Vac is available in the drive signal generator 71. Based on the polarity information and based on the state signal ST the drive signal generator 71 is configured to decide whether to operate each of the resonant converter stages 3a, 3b, 3c in the first or second transfer state TF1, TF2 during the transfer phase.

In addition to the injection time references Tinja*, Tinjb*, Tinjc* and the state signal ST, the drive signal generator 71 receives the current threshold Ith and receives one of the measured alternating current Iac' and the measured input current Iin'. The current threshold Ith is provided by the power transfer controller 73, for example.

By comparing the measured alternating current Iac' (or the measured input current Iin') with the current threshold Ith, the drive signal generator 71 is configured to determine the time instances at which the precharge phases end. The measured alternating current Iac' or the measured input current Iin' is a measurement signal that represents the respective current Iac, Iin and can be obtained by a conventional current sensor, for example.

The drive signal generator 71 is configured, based on the measured alternating current Iac' (or the measured input current Iin') and based on the current threshold Ith, to adjust the precharge time Tpc. More specifically, the power transfer controller 71 is configured to end a respective precharge phase and start the respective transfer phase when the magnitude of the measured alternating current Iac' (or the measured input current Iin') has increased from zero to the current threshold Ith.

Furthermore, the drive signal generator 71, in the way explained with reference to Figures 7 and 8, at the end of the longest injection time is configured to end one operating cycle of the resonant converter stages 3a, 3b, 3c and a corresponding half-period of the alternating voltage Vac and start a new operating cycle and a corresponding half-period of the alternating voltage Vac. This includes controlling the switching circuit 15 in the input stage 1 such that the switching circuit 15 changes its switching state from one of the first and second operating states to the other one of the first and second operating states, so that the alternating voltage Vac changes its polarity.

Alternatively to the drive signal generator 71 receiving the measured alternating current Iac' (or the measured input current Iin') and the current threshold Ith for adjusting the precharge time Tpc, the measured alternating current Iac' (or the measured input current Iin') and the current threshold Ith may be received by the power transfer controller 73. In this example, the power transfer controller 73 may be configured to detect the end of the precharge phase and the beginning of the transfer phase using the measured alternating current Iac' (or the measured input current Iin') and the current threshold Ith, and to signal the end of the precharge phase to the drive signal generator 71.

As explained above and as illustrated in Figure 16, the control circuit 7 includes a power transfer controller 73. The power transfer controller 73 is configured to control the power that is transferred from the input 11, 12 of the input stage 1 to the power grid connected to the outputs Outa, Outb, Outc by the power converter. For this, the power transfer controller 73 receives a power reference P* and signals representing either the instantaneous input power or output power, and generates the current threshold Ith. The power reference P* is a signal that defines the desired power level of the power that is to be transferred by the power converter. According to one example illustrated in Figure 16, the power transfer controller 73 receives the signals representing the output power of the power converter. The signals include the measured output voltages (grid voltages) Va', Vb', Vc' and the measured output currents Iouta', Ioutb', Ioutc'. These signals may be obtained by measuring the respective voltages and currents using conventional voltage and current sensors.

Based on the power reference P* and the signals representing the instantaneous output power, the power transfer controller 73 generates the current threshold Ith that is either provided to the drive signal generator 71 (as illustrated in Figure 16) or that is internally used in the power transfer controller 73 together with the measured alternating current Iac' (or the measured input current Iin') to generate a signal indicating the end of the precharge (the option that is not illustrated in Figure 16).

For generating the current threshold Ith, the power transfer controller 73 includes a current threshold controller 74. One example of the current threshold controller is illustrated in Figure 17.

Referring to Figure 17, the current threshold controller 74 is configured to generate a power signal P' that represents the instantaneous output power of the power converter. For generating the power signal P' the current threshold controller 74 calculates the output power Pa', Pb', Pc' at each of the outputs Outa, Outb, Outc by multiplying the respective measured output current Iouta', Ioutb', Ioutc' with the respective measured grid voltage Va', Vb', Vc' using a respective multiplier 75a, 75b, 75c, and sums up the calculated output powers Pa', Pb', Pc' using an adder 76.

Referring to Figure 17, a subtractor 77 subtracts the power signals P' from the power reference P* to provide a power error signal. The power error signal is received by a controller 78, such as a PI (proportional-integrative) controller, which provides the current threshold Ith. Generating the current threshold Ith in this way regulates the (average) output power to be essentially equal to the power reference P*.

Furthermore, the power transfer controller 73 provides a power transfer signal K that is dependent on the power reference P* and is used to adjust the injection time references Tinja*, Tinjb*, Tinjc*.

According to one example, the power transfer controller is configured to generate the power transfer signal K dependent on the power reference P* and the RMS value Vrms of the grid voltages Va, Vb, Vc as follows:

$$K = \frac{\sqrt{3} \cdot Vrms}{P*} \qquad\qquad (1).$$

For adjusting the injection time references Tinja*, Tinjb*, Tinjc*, the control circuit 7 includes a plurality of controller branches 70a, 70b, 70c that each receive the power transfer signal K and generate a respective one of the injection time references Tinja*, Tinjb*, Tinjc*. Each of these controller branches 70a, 70b, 70c includes a multiplier 74a, 74b, 74c that receives the power transfer signal K and multiplies the power transfer signal K with the absolute value of a respective measured grid voltage Va', Vb', Vc' to provide a respective output current reference Iouta*, Ioutb*, Ioutc*. Each of the measured input voltages Va', Vb', Vc' represents a respective one of the input voltages Va, Vb, Vc and can be obtained by measuring the input voltage Va, Vb, Vc using a conventional voltage sensor (not illustrated). The output current references Iouta*, Ioutb*, Ioutc* represent desired average output currents <Iouta>, <Ioutb>, <Ioutc> to be provided to the power grid. By multiplying the power transfer signal K with the measured input voltages Va', Vb', Vc' obtain the output current references Iouta*, Ioutb*, Ioutc*, the output current references Iouta*, Ioutb*, Ioutc* are proportional to the grid voltages Va, Vb, Vc. Thus, by controlling the output currents Iouta, Ioutb, Ioutc to be in correspondence with the output current references Iouta*, Ioutb*, Ioutc* the average output currents <Iouta>, <Ioutb>, <Ioutc> are proportional to the grid voltages Va, Vb, Vc, so that the power converter operates as a PFC converter.

Referring to Figure 16 each of the injection time references Tinja*, Tinjb*, Tinjc* is generated by a respective controller 78a, 78b, 78c, such as a proportional-integral (PI) controller based on an output current error Iouta err, Ioutb_err, Ioutc_err. The output current error Iouta _err, Ioutb_err, Ioutc_err represents a difference between the output current reference Iouta*, Ioutb*, Ioutc* and the instantaneous average output current <Iouta>, <Ioutb>, <Ioutc>. In each of the controller branches 70a, 70b, 70c the output current error Iouta _err, Ioutb_err, Ioutc_err is provided by a subtractor 75a, 75b, 75c that receives the output current reference Iouta*, Ioutb*, Ioutc* and an average measured output current. The average measured output current is obtained, for example, by filtering the measured (instantaneous) output current Iouta', Ioutb', Ioutc' using a low-pass filter 76a, 76b, 76c and obtaining the absolute value of the filter output signal using an absolute value calculator 77a, 77b, 77c. The low-pass filter 76a, 76b, 76c is implemented such, for example, that the measured output current Iouta', Ioutb', Ioutc' is averaged at least over the duration of one operating cycle. The measured output currents Iouta', Ioutb', Ioutc' may be obtained by measuring the output currents Iouta, Ioutb, Ioutc using conventional current sensors.

It should be noted that by calculating the absolute values of the measured grid voltages Va', Vb', Vc' and the absolute values of the filtered measured output currents Iouta', Ioutb', Ioutc' information on the polarity of the grid voltages Va, Vb, Vc and the current direction of the output currents Iouta, Ioutb, Ioutc is removed. This information, however, is again introduced into the control loop by the state detector 72.

Referring to the above, the resonant converter stage having the longest injection time may operate in the transfer state for a certain time period after the end of the transfer phase, that is, after the calculated injection time period. In this way, power is transferred to the power grid by the resonant converter stage having the longest injection time after the longest injection time has expired. This may slightly increase the average output current provided by the resonant converter stage as compared to the average output current resulting from the power transfer during the injection time. However, by considering the instantaneous output current of each of the resonant converter stages in the calculation of the injection time references, the injection time reference of the resonant converter stage having the longest injection time will automatically be reduced when the resonant converter stage is operated in the transfer state for a certain time period after the injection time has expired, so that the average output current provided by that resonant converter stage essentially equals the respective output current reference Iouta*, Ioutb*, Ioutc*.

In the power converter explained herein before, the voltage blocking capability of the electronic switches 151-154 in the switching circuit 15 of the input stage 1 needs to be adapted to the maximum voltage level of the input voltage Vin that may occur. The voltage blocking capability of the electronic switches in the switching circuits 5a, 5b, 5c either need to be adapted to the amplitude of the grid voltages or the maximum of the input voltage Vresa, Vresb, Vresc, whichever is higher. As explained above, the maximum of the input voltages Vresa, Vresb, Vresc is dependent on the voltage level of the input voltage Vin and the winding ratio R of the transformers 20a, 20b, 20c. According to one example, the winding ratio is adapted to the maximum voltage level of the input voltage Vin such that the maximum input voltage Vresa, Vresb, Vresc is lower than the amplitude of the grid voltages Va, Vb, Vc. In this example, the voltage blocking capability of the switches in the switching circuits 5a, 5b, 5c needs to be adapted to the amplitude of the grid voltages Va, Vb, Vc, which may be lower than the maximum voltage level of the input voltage Vin. In this example, in the switching circuits 5a, 5b, 5c of the resonant converter stages 3b, 3b, 3c electronic switches with a lower voltage blocking capability than the electronic switches in the switching circuit 15 of the input stage 1 may be used.

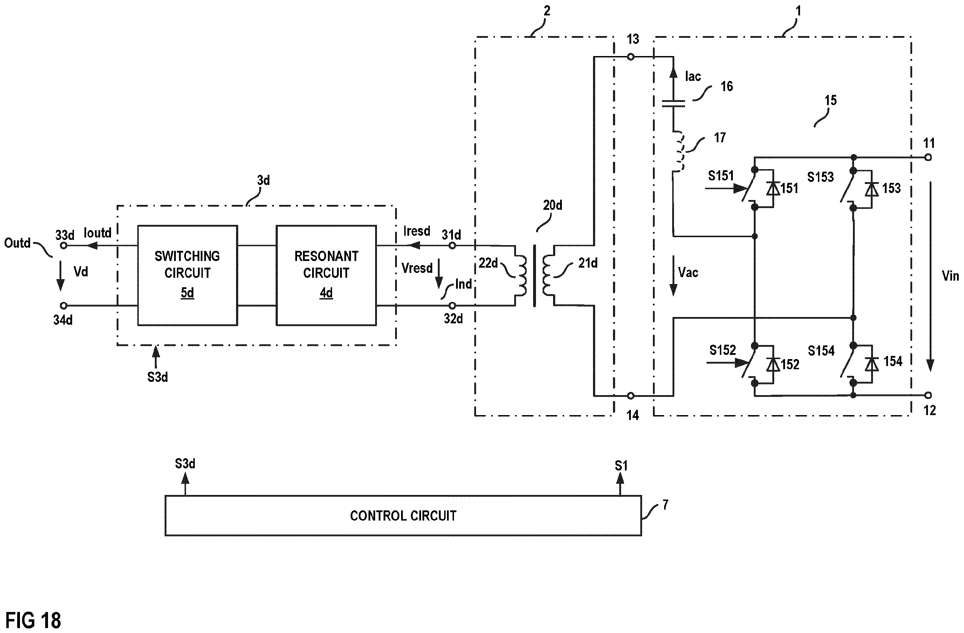

In the example explained herein before, the power converter includes three resonant converter stages 3a, 3b, 3c. However, as mentioned herein before, implementing the power converter with three resonant converter stages is only an example. According to another example illustrated in Figure 18, the power converter includes only one resonant converter stage 3d. Referring to Figure 18, the transformer arrangement 2 includes only one transformer 20d with a first winding 21d connected to the output nodes 13, 14 of the input stage 1, and a second inductor 22d connected to the resonant converter stage 3d. The first and second windings 21d, 22d are inductively coupled.

The input stage 1 may be implemented in the same way as explained herein before. Everything explained herein before with regard to the functionality of the input stage applies to the input stage 1 illustrated in Figure 18 accordingly. Furthermore, everything explained with regard to the transformers 20a, 20b, 20c of the transformer arrangement 2 explained herein before applies to the transformer 20d illustrated in Figure 18 accordingly.

The resonant converter stage 3d may be implemented in accordance with any one of the resonant converter stages 3a, 3b, 3c illustrated in Figure 11 and, in particular, in accordance with the resonant converter stage 3 illustrated in Figure 12. Referring to Figure 18, an input 31d, 32d of the resonant converter stage 3d is connected to the second winding 22d of the transformer 20d to receive an input voltage Vresd, which causes a resonant current Iresd to flow in the resonant circuit 4d of the resonant converter stage 3d. A switching circuit 5d is connected between the resonant circuit 4d and the output 33d, 34d of the resonant converter stage 3d where the output current Ioutd is away level. Everything explained herein before with regard to the functionality of the resonant circuit 4d and the switching circuit 5d applies to the resonant converter stages 3d according to Figure 18 equivalently.

Referring to Figure 18, the power converter further includes a control circuit 7 that is configured to control operation of the input stage 1 and the resonant converter stage 3d. For controlling operation of the input stage 1, the control circuit 7 provides a control signal S1 that controls operation of the switching circuit 15 in the input stage 1. For controlling operation of the resonant converter stage 3d, the control circuit 7 provides a control signal S3d that controls operation of the switching circuit 5d of the resonant converter stage 3d.

Everything explained herein before with regard to the functionality of the control circuit 7 that is configured to control operation of the input stage 1 and the resonant converter stages 3a, 3b, 3c explained before applies to the functionality of the control circuit 7 according to Figure 18 accordingly. This functionality is illustrated in Figure 18 that shows signal diagrams of the output current Ioutd, the alternating voltage Vac, the input voltage Vresd of the resonant converter stage 3d, alternating current Iac and the resonant current of the power converter according to Figure 18 during several operating cycles of the resonant converter stage 3d and half-periods of the alternating voltage Vac.

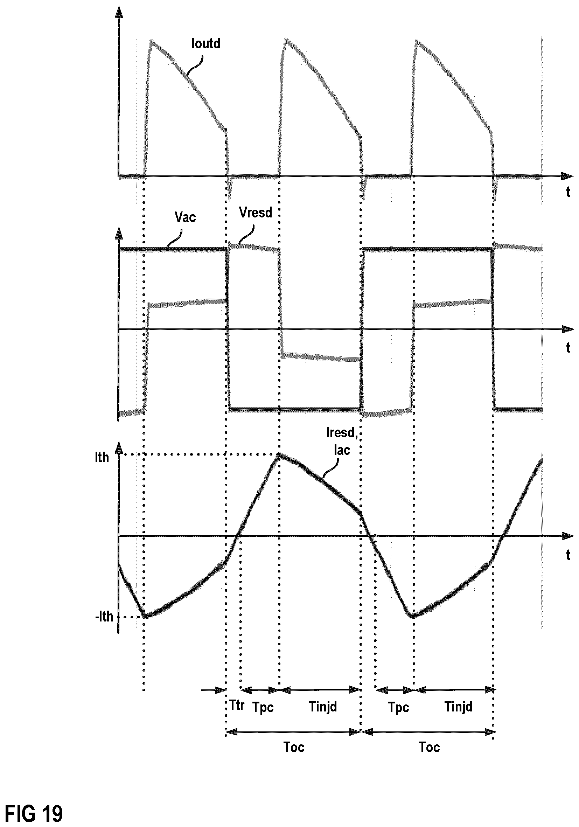

Referring to Figure 19, each operating cycle includes a precharge phase, which is an operating phase, in which the magnitude of the resonant current Iresd increases from zero to a predefined current threshold Ith. In Figure 19, Tpc denotes the durations of the precharge phase in the individual operating cycles. The current threshold Ith may be adjusted dependent on a desired power level that is to be transmitted. During the precharge phase, the resonant converter stage 3d is operated in the freewheeling state.

Furthermore, referring to Figure 19, each operating cycle includes a transfer phase that starts at the end of the precharge phase. During the transfer phase, the resonant converter stage 3d is in one of the first and second transfer states TF1, TF2. Everything explained herein before with regard to selecting the transfer state from one of the first and second transfer states TF1, TF2 applies to the resonant converter stage 3d illustrated in Figure 18 accordingly. In Figure 19, Tinjd denotes the injection time of the resonant converter stage.

Referring to Figure 19, one operating cycle and, therefore, one half-period of the alternating voltage ends at the end of the injection time Tinj d. At the end of the injection time and the beginning of a new half-period of the alternating voltage Vac the alternating voltage Vac changes its polarity, so that the alternating current Iac and the resonant current Iresd, in a transient phase, rapidly turns zero, so that a new precharge phase starts. In Figure 19, Ttr denotes the durations of the transient phases.

Just for the purpose of illustration, in the example illustrated in Figure 19, the alternating current Iac equals the resonant current Iresd. This can be achieved by adjusting the winding ratio R of the transformer 20d to be 1: 1.

The control circuit 7 can be implemented in the same way as the control circuit illustrated in Figure 16, wherein only one control loop for adjusting the desired injection time is required.

Some of the aspects explained above are briefly summarized in the following with reference to numbers example.

Example 1. A power converter, including: an input stage including an input configured to receive an input voltage, and an output; at least one resonant converter stage including an input and an output configured to be coupled to a power grid; a transformer coupled between the output of the input stage and the input of the at least one resonant converter stage; and a control circuit configured to control operation of the input stage and the at least one resonant converter stage, wherein the input stage includes a switching circuit connected to the input of the input stage and at least one capacitor connected between the switching circuit and the output of the input stage.

Example 2. The power converter of example 1, wherein the transformer includes: at least one first winding coupled to the output of the input stage; and at least one second winding coupled to the input of the at least one resonant converter stage, wherein the first winding and the at least one second winding are inductively coupled.

Example 3. The power converter of example 1 or 2, wherein the at least one resonant converter stage includes exactly one resonant converter stage.

Example 4. The power converter of example 1 or 2, wherein the at least one resonant converter stage includes three resonant converter stages.

Example 5. The power converter of examples 2 and 4, wherein the at least one first winding includes three first windings connected in series, wherein the at least one second winding includes three second windings each coupled to a respective one of the three resonant converter stages and each inductively coupled with a respective one of the three first windings, and wherein a series circuit including the three first windings is coupled to the output of the input stage.

Example 6. The power converter of any one of examples 1 to 5, wherein, to control operation of the input stage, the control circuit is configured to control operation of the switching stage such that the switching circuit generates an alternating voltage based on the input voltage.

Example 7. The power converter of any one of examples 1 to 6, wherein, to control operation of the at least one resonant converter stage, the control circuit is configured to operate the at least one resonant converter stage in a plurality of operating cycles, wherein each operating cycle includes a precharge phase, in which energy is stored in the at least one resonant converter stage, and a transfer phase, in which power is transferred from the at least one resonant converter stage to the output of the at least one resonant converter stage.

Example 8. The power converter of examples 4 and 7, wherein the control circuit is configured to start the transfer phases of the three resonant converter stage at the same time and adjust durations of the transfer phases of the three resonant converter stage individually.

Example 9. The power converter of any one of examples 1 to 8, wherein the at least one resonant converter stage includes: a resonant circuit coupled to the input of the at least one resonant converter stage; and a switching circuit coupled between the resonant circuit and the output of the at least one resonant converter stage.

Example 10. The power converter of any one of examples 7 to 9, wherein, to control operation of the at least one resonant converter stage, the control circuit is configured to control operation of the switching circuit.

Example 11. The power converter of example 10, wherein the control circuit, to operate the at least one resonant converter stage in the precharge phase, is configured to operate the switching circuit of the at least one resonant converter stage in a freewheeling state.

Example 12. The power converter of example 10 or 11, wherein the control circuit, to operate the at least one resonant converter stage in the transfer phase, is configured to operate the switching circuit of the at least one resonant converter stage in one of a first transfer state and a second transfer state.

Example 13. The power converter of example 12, wherein the control circuit is configured to select one of the first transfer state and the second transfer state dependent on a polarity of the alternating voltage and dependent on a polarity of a grid voltage received at the output of the at least one resonant converter stage.

Example 14. The power converter of any one of examples 7 to 13, wherein the control circuit is configured to adjust a duration of the transfer phase of the at least one resonant converter stage dependent on a power reference, dependent on a grid voltage received at the output of the at least one resonant converter stage, and an instantaneous output current of the at least one resonant converter stage

Example 15. The power converter of any one of examples 7 to 12, wherein each operating cycle further includes a transient phase between a start of the operating cycle and a start of the precharge phase.

Example 16. The power converter of example 15, wherein the power converter includes a plurality of resonant converter stages, wherein the control circuit is configured to operate that one of the resonant converter stages that has the longest duration of the transfer phase in one of the first and second transfer states at least for a portion of the transient phase, and to operate the remainder of the resonant converter stages in the freewheeling state.

Example 17. A control circuit configured to control operation of an input stage and at least one resonant converter stage of a power converter, wherein the power converter includes: the input stage including an input configured to receive an input voltage, and an output; the at least one resonant converter stage including an input and an output configured to be coupled to a power grid; and a transformer coupled between the output of the input stage and the input of the at least one resonant converter stage; and, wherein the input stage includes a switching circuit connected to the input of the input stage and at least one capacitor connected between the switching circuit and the output of the input stage.

Example 18. The control circuit according to example 17, wherein, to control operation of the input stage, the control circuit is configured to control operation of the switching stage such that the switching circuit generates an alternating voltage based on the input voltage.

Example 19. The control circuit according to example 17 or 18, wherein, to control operation of the at least one resonant converter stage, the control circuit is configured to operate the at least one resonant converter stage in a plurality of operating cycles, wherein each operating cycle includes a precharge phase, in which energy is stored in the at least one resonant converter stage, and a transfer phase, in which power is transferred from the at least one resonant converter stage to the output of the at least one resonant converter stage.

Example 20. A method, including: controlling operation of an input stage and at least one resonant converter stage in a power converter, wherein the power converter includes: the input stage including an input configured to receive an input voltage, and an output; the at least one resonant converter stage including an input and an output configured to be coupled to a power grid; and a transformer coupled between the output of the input stage and the input of the at least one resonant converter stage; and, wherein the input stage includes a switching circuit connected to the input of the input stage

and at least one capacitor connected between the switching circuit and the output of the input stage.

Example 21. An executable program code including instructions which, when executed by a control circuit including a microcontroller, to cause the control circuit to carry out the method according to example 20.

**Claims**

1. A power converter, comprising:

   an input stage (1) comprising an input (11, 12) configured to receive an input voltage (Vin), and an output (13, 14);
   at least one resonant converter stage (3a, 3b, 3c; 3d) comprising an input (Ina, Inb, Inc; Ind) and an output (Outa, Outb, Outc; Outd) configured to be coupled to a power grid;
   a transformer (2) coupled between the output (13, 14) of the input stage (1) and the input (Ina, Inb, Inc; Ind) of the at least one resonant converter stage (3a, 3b, 3c; 3d); and
   a control circuit (7) configured to control operation of the input stage (1) and the at least one resonant converter stage (3a, 3b, 3c; 3d),
   wherein the input stage (1) comprises a switching circuit (15) connected to the input (11, 12) of the input stage (1) and at least one capacitor (16) connected between the switching circuit (15) and the output (13, 14) of the input stage (1).

2. The power converter of claim 1, wherein the transformer (2) comprises:

   at least one first winding (21a, 21b, 21c; 21d) coupled to the output (13, 14) of the input stage (1); and
   at least one second winding (22a, 22b, 22c; 22d) coupled to the input (Ina, Inb, Inc; Ind) of the at least one resonant converter stage (3a, 3b, 3c; 3d),
   wherein the first winding (21) and the at least one second winding (22a, 22b, 22c; 22d) are inductively coupled.

3. The power converter of claim 2,

   wherein the at least one first winding comprises three first windings (21a, 21b, 21c) connected in series,
   wherein the at least one second winding comprises three second windings (22a, 22b, 22c) each coupled to a respective one of the three resonant converter stages (3a, 3b, 3c) and each inductively coupled with a respective one of the three first windings (21a, 21b, 21c), and
   wherein a series circuit including the three first windings (21a, 21b, 21c) is coupled to the output (13, 14) of the input stage (1).

4. The power converter of any one of the preceding claims,
   wherein, to control operation of the input stage (1), the control circuit (7) is configured to control operation of the switching stage (15) such that the switching circuit (15) generates an alternating voltage (Vac) based on the input voltage (Vin).

5. The power converter of any one of the preceding claims,

   wherein, to control operation of the at least one resonant converter stage (3a, 3b, 3c; 3d), the control circuit (7) is configured to operate the at least one resonant converter stage (3a, 3b, 3c; 3d) in a plurality of operating cycles, wherein each operating cycle comprises a precharge phase (Tpc), in which energy is stored in the at least one resonant converter stage (3a, 3b, 3c; 3d), and a transfer phase (Tinja, Tinjb, Tinjc; Tinjd), in which power is transferred from the at least one resonant converter stage (3a, 3b, 3c; 3d) to the output of the at least one resonant converter stage (3a, 3b, 3c; 3d).

6. The power converter of claim 5,

   wherein the at least one resonant converter stage (3a, 3b, 3c) comprises three resonant converter stages, and
   wherein the control circuit is configured to start the transfer phases of the three resonant converter stage (3a, 3b, 3c) at the same time and adjust durations (Tinja, Tinjb, Tinjc) of the transfer phases of the three resonant converter stage (3a, 3b, 3c) individually.

7. The power converter of any one of the preceding claims,

wherein the at least one resonant converter stage (3a, 3b, 3c; 3d) comprises:

> a resonant circuit (4a 4b, 4c; 4d) coupled to the input (Ina, Inb, Inc; Ind) of the at least one resonant converter stage (3a, 3b, 3c; 3d); and
> a switching circuit (5a, 5b, 5c; 5d) coupled between the resonant circuit (4a 4b, 4c; 4d) and the output (Outa, Outb, Outc; Outd) of the at least one resonant converter stage (3a, 3b, 3c; 3d).

8. The power converter of any one of claims 5 to 7,
wherein the control circuit (7), to operate the at least one resonant converter stage (3a, 3b, 3c; 3d) in the precharge phase, is configured to operate the switching circuit (5a, 5b, 5c; 5d) of the at least one resonant converter stage (3a, 3b, 3c, 3d) in a freewheeling state (FW1, FW2).

9. The power converter of any one of claims 5 to 8,
wherein the control circuit (7), to operate the at least one resonant converter stage (3b, 3b, 3c; 3d) in the transfer phase, is configured to operate the switching circuit of the at least one resonant converter stage (3a, 3b, 3c; 3d) in one of a first transfer state (TF1) and a second transfer state (TF2).

10. The power converter of any one of claims 5 to 9,
wherein the control circuit (7) is configured to adjust a duration (Tinja, Tinjb, Tinjc; Tinjd) of the transfer phase of the at least one resonant converter stage (3b, 3b, 3c; 3d) dependent on a power reference (P*), dependent on a grid voltage received at the output (Outa, Outb, Outc; Outd) of the at least one resonant converter stage (3b, 3b, 3c; 3d), and an instantaneous output current (Iouta, Ioutb, Ioutc; Ioutd) of the at least one resonant converter stage (3b, 3b, 3c; 3d)

11. The power converter of any one of claims 5 to 10,
wherein each operating cycle further includes a transient phase between a start of the operating cycle (Toc) and a start of the precharge phase (Tpc).

12. The power converter of claim 11,

> wherein the power converter includes a plurality of resonant converter stages (3a, 3b, 3c),
> wherein the control circuit (7) is configured to operate that one of the resonant converter stages (3a, 3b, 3c) that has the longest duration of the transfer phase in one of the first and second transfer states (TF1, TF2) at least for a portion of the transient phase, and to operate the remainder of the resonant converter stages in the freewheeling state.

13. A control circuit configured to control operation of an input stage (1) and at least one resonant converter stage (3a, 3b, 3c; 3d) of a power converter,
wherein the power converter comprises:

> the input stage (1) comprising an input (11, 12) configured to receive an input voltage (Vin), and an output (13, 14);
> the at least one resonant converter stage (3a, 3b, 3c; 3d) comprising an input (Ina, Inb, Inc; Ind) and an output (Outa, Outb, Outc; Outd) configured to be coupled to a power grid; and
> a transformer (2) coupled between the output (13, 14) of the input stage (1) and the input (Ina, Inb, Inc; Ind) of the at least one resonant converter stage (3a, 3b, 3c; 3d); and,
> wherein the input stage (1) comprises a switching circuit (15) connected to the input (11, 12) of the input stage (1) and at least one capacitor (16) connected between the switching circuit (15) and the output (13, 14) of the input stage (1).

14. A method, comprising:

> controlling operation of an input stage (1) and at least one resonant converter stage (3a, 3b, 3c; 3d) in a power converter,
> wherein the power converter comprises:

>> the input stage (1) comprising an input (11, 12) configured to receive an input voltage (Vin), and an output (13, 14);
>> the at least one resonant converter stage (3a, 3b, 3c; 3d) comprising an input (Ina, Inb, Inc; Ind) and an output (Outa, Outb, Outc; Outd) configured to be coupled to a power grid; and

a transformer (2) coupled between the output (13, 14) of the input stage (1) and the input (Ina, Inb, Inc; Ind) of the at least one resonant converter stage (3a, 3b, 3c; 3d); and,

wherein the input stage (1) comprises a switching circuit (15) connected to the input (11, 12) of the input stage (1) and at least one capacitor (16) connected between the switching circuit (15) and the output (13, 14) of the input stage (1).

15. An executable program code comprising instructions which, when executed by a control circuit comprising a microcontroller, to cause the control circuit to carry out the method according to claim 14.

**FIG 1**

FIG 2

Vin    BAT

11

12

FIG 3

Vouta PSa
33a
Voutb PSb
34a, 34b, 34c    33b
Voutc PSc
33c

FIG 4

33a    34c
Vouta
34a, 33b    Voutc
Voutb
34b    33c

FIG 5

Va    Vb    Vc

t

t1

ST1    ST2    ST3    ST4    ST5    ST6

OPERATING THE SWITCHING CIRCUIT OF THE INPUT STAGE TO GENERATE AN ALTERNATING VOLTAGE BASED ON THE INPUT VOLTAGE

~ 101

~ 100

OPERATING EACH RESONANT CONVERTER STAGE IN A PLURALITY OF OPERATING CYCLES, EACH INCLUDING A PRECHARGE PHASE AND A TRANSFER PHASE

~ 102

FIG 6

FIG 7

FIG 8

EP 4 604 372 A1

Va   Vb   Vc

0          t

<Iouta>   <Ioutb>
<Ioutc>

0          t

Tinja   Tinjc   Tinjb

0          t

**FIG 9**

Va   Vb   Vc

0          t

<Iouta>   <Ioutb>   <Ioutc>

0          t

Tinja   Tinjc   Tinjb

0          t

**FIG 10**

FIG 11

FIG 12

FIRST FREEWHEELING
STATE (FW1)

**FIG 13A**

SECOND FREEWHEELING
STATE (FW2)

**FIG 13B**

FIRST TRANSFER STATE
(TF1)

**FIG 13C**

SECOND TRANSFER STATE
(TF2)

**FIG 13D**

**FIG 14**

**FIG 15**

FIG 16

FIG 17

FIG 18

**FIG 19**

| | Europäisches Patentamt European Patent Office Office européen des brevets | **EUROPEAN SEARCH REPORT** | **Application Number** EP 24 15 7654 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 9 401 664 B2 (MASSACHUSETTS INST TECHNOLOGY [US]) 26 July 2016 (2016-07-26)<br>* abstract *<br>* figures 2, 4, 9 * | 1-9,<br>13-15<br>10-12 | INV.<br>H02M1/00<br>H02M5/22<br>H02M5/297<br>H02M7/48 |
| X<br><br>A | US 11 689 115 B2 (UNIV NEW YORK STATE RES FOUND [US] ET AL.)<br>27 June 2023 (2023-06-27)<br>* abstract; figures 6A, 6B * | 1,13-15<br><br>2-12 | |
| X<br><br><br><br><br><br><br><br><br><br>A | CHAVEZ DANIEL ET AL: "Single-Stage Quad-Active-Bridge Series-Resonant AC-DC Converter: Modulation for Active and Reactive Power",<br>2023 IEEE ENERGY CONVERSION CONGRESS AND EXPOSITION (ECCE), IEEE,<br>29 October 2023 (2023-10-29), pages 2216-2221, XP034508165,<br>DOI: 10.1109/ECCE53617.2023.10362434<br>[retrieved on 2023-12-29]<br>* abstract; figure 2 * | 1-3,<br>13-15<br><br><br><br><br><br><br><br><br>4-12 | TECHNICAL FIELDS SEARCHED (IPC)<br><br>H02M |

The present search report has been drawn up for all claims

| Place of search | Date of completion of the search | Examiner |
|---|---|---|
| The Hague | 15 July 2024 | Van der Meer, Paul |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 15 7654

This annex lists the patent family members relating to the patent documents cited in the above-mentioned European search report.
The members are as contained in the European Patent Office EDP file on
The European Patent Office is in no way liable for these particulars which are merely given for the purpose of information.

15-07-2024

| Patent document cited in search report | | Publication date | Patent family member(s) | | Publication date |
|---|---|---|---|---|---|
| US 9401664 | B2 | 26-07-2016 | US | 2013314948 A1 | 28-11-2013 |
|  |  |  | WO | 2013176735 A1 | 28-11-2013 |
| US 11689115 | B2 | 27-06-2023 | NONE | | |

EPO FORM P0459

For more details about this annex : see Official Journal of the European Patent Office, No. 12/82